# EUROPÄISCHE PATENTANMELDUNG

(11) **EP 2 765 120 A2**
(43) Veröffentlichungstag der Anmeldung: **13.08.2014**
(21) Anmeldenummer: 14000494.6
(22) Anmeldetag: 12.02.2014
(51) Int. Cl.: C04B 28/26, C04B 14/16, C04B 20/10

(54) **Verfahren für das Verbinden von Körnern aus geblähtem Vulkanglas**

(30) Priorität: 12.02.2013 AT 1132013
(71) Anmelder: Wustinger, Horst, 5204 Straßwalchen (AT)
(72) Erfinder: Wustinger, Horst, 5204 Straßwalchen (AT)

(57) **Zusammenfassung**

Die Erfindung betrifft ein Verfahren für das Verbinden von Körnern aus geblähtem Vulkanglas unter Anwendung eines Bindemittels, welches aus mehreren flüssigen oder pulverförmigen Komponenten bzw. Komponentengruppen zusammenzumischen ist und nach dem Zusammenmischen der Komponenten bzw. Komponentengruppen aushärtbar ist, wobei Körner aus geblähtem Vulkanglas mit dem Bindemittel vermischt werden, das Mischgut in einer Form durch Druck verdichtet wird und das im Mischgut enthaltene Bindemittel aushärten gelassen wird.

Der Mischvorgang erfolgt in zwei Gängen, wobei im ersten Mischgang die zu verbindende Schüttung von Körnern von geblähtem Vulkanglas nur mit einem solchen Teil der Komponenten bzw. Komponentengruppen des mehrkomponentigen Bindemittels, welcher für sich allein nicht aushärtbar ist, vollständig vermischt wird, und wobei in einem oder mehreren späteren Mischgängen der Rest des Bindemittels zugegeben und eingemischt wird.

## Beschreibung

Die Erfindung betrifft ein Verfahren für das Verbinden von Körnern aus geblähtem Vulkanglas unter Anwendung eines aus mehreren Komponenten bzw. Komponentengruppen zusammenzusetzenden Bindemittels.

Die AT 504 051 B1 beschreibt ein Verfahren für die Herstellung eines Schüttgutes durch Aufblähen von Körnern eines Kristallwasser enthaltenden Minerals durch Hitzeeinwirkung. Typischerweise ist das Mineral Vulkanglas, insbesondere Perlite, obsidian oder Pechstein. Das Aufschäumen erfolgt indem die mineralischen Körner in das obere Ende eines Schachtofens eingegeben werden und in diesem nach unten fallen, wobei sie sich erhitzen und aufblähen. Am unteren Ende werden die Körner an einer trichterförmigen Auffangwand und in einem kühlen, auch dem Transport dienenden Luftstrom gekühlt und verfestigt. Es entstehen Kugeln mit glasierter, geschlossener Oberfläche.

Die AT 510 508 A1 beschreibt die Herstellung von Körpern aus Körnern geblähten Vulkanglases unter Anwendung von Wasserglas und Saccariden als Bindemittel. Optional können auch weitere Komponenten wie Puzzolane und Tenside beigegeben werden. Die Komponenten werden gemischt und die Mischung wird unter Mikrowelleneinwirkung erhitzt, erhärtet, verbunden und entwässert. Weiters ist in der AT 510 508 A1 erklärt, dass es für die Wärmeisolierfähigkeit der so hergestellten Körper vorteilhaft ist, wenig Bindemittel zu verwenden, weil damit hohe Porosität erreichbar ist. Zudem beschreibt die AT 510 508 A1 wie das aus der AT 504 051 B1 bekannte Verfahren für das Herstellen von geblähten Vulkanglaskörnern abzuwandeln ist um geblähte Körner mit Oberflächeneigenschaften zu erhalten, die für das Verbinden mit Wasserglas vorteilhaft sind. Dazu sind die Körner nach dem Aufblähen auf ihre letztendliche Solldichte innerhalb von etwa 5 Sekunden auf ein Temperaturniveau von 100 °C bis 150 °C abzukühlen und dann in diesem Temperaturintervall mehrere Sekunden zu halten. Damit wird erreicht, dass die Oberfläche der geblähten Körner wie die Haut eines Ballons rundum geschlossen ist, dabei aber gerade so rau ist, dass sie durch eine kleine Menge Wasserglas rundum gut benetzbar ist.

Die CN 101498165 B beschreibt eine Verbund-Isolierplatte zu deren Bildung Körner aus geschäumtem Perlite, welche mit einem als Binder wirkenden Slurry vermischt sind, sowie eine mechanisch schützende, mineralische Deckschicht gemeinsam zu einer Platte gepresst und aushärten gelassen werden.

Die CN 201121391 Y beschreibt eine Platte aus durch Zement aneinander gebundenen Körnern von geblähtem Perlite. Die Platte weist einen verstärkenden Kern in Form eines Gitters auf. An einer Seite hat sie einen Raster von Bohrungen durch welchen die Schallabsorptionsfähigkeit verbessert wird.

In der CN 201162285 Y wird vorgeschlagen, eine feuerschützende, wärmeisolierende Platte zu bilden, indem eine Platte aus miteinander verbundenen geblähten Perlitekörnern beidseits durch Stahlblech bedeckt wird.

In der DE 2123509 A1 wird vorgeschlagen, eine wärmeisolierende Platte aus einer Mischung von feinen, geblähten Perlitekörnern, Mineralfasern und Pflanzenfasern zu bilden. Die Festigkeit des Verbundes wird vorwiegend mittels Klebstoffen erreicht, welche vorwiegend die Pflanzenfasern verbinden. Als Bindemittel kommen auch Wasserglas, Zement, Stärke etc. in Betracht.

Die DE 2311918 B2 beschreibt eine Verbundplatte aus einer Schicht von miteinander verbundenen geblähten Perlitekörnern sowie einem Überzug aus Faserschichtstoff um die Festigkeit zu verbessern. In der Schicht der geblähten Perlitekörner sind auch Ton, ein weiteres Bindemittel (Bitumen, Stärke) und faseriges Zellulosematerial, enthalten. Für die Herstellung wurden die Komponenten allesamt gemeinsam vermischt, gepresst und entwässert.

Die DE 8004723 U1 beschreibt eine Verbundplatte aus Trägerplatte und Putzbeschichtung wobei die Putzbeschichtung bestehend aus expandiertem Vermiculit sowie Portlandzement und/oder Tonerdezement und/oder Wasserglas in nass angerührtem Zustand als Bindemittel auf die Trägerplatte aufgesprüht wird und dort aushärtet und austrocknet.

Die DE 20114321 U1 beschreibt eine feuerschützende und wärmeisolierende Sandwichplatte, welche zwei Deckschichten und eine Mittelschicht umfasst. Die Deckschichten bestehen aus Blech. Die Mittelschicht (Dämmstoffschicht) besteht zumindest aus den Komponenten geblähte Perlitekörner, Glasfasern und Wasserglas (Alkalisilikat). Die Komponenten der Mittelschicht werden vermischt, wobei das Wasserglas in flüssiger Form vorliegt. Die Mischung wird in Form gebracht, durch Pressen etwas verdichtet, aushärten gelassen und getrocknet. Das Trocknen erfolgt bevorzugt unter Zuhilfenahme von Mikrowellenbeheizung. Deckschichten und Mittelschicht werden dann mittels eines nicht näher beschriebenen feuerfesten Klebstoffes verbunden.

Entsprechend den bekannten Herstellungsverfahren wird das Bindemittel entweder schon als fertige aushärtbare Mischung der Schüttung aus geblähten Körnern beigemischt oder es werden alle Komponenten des mehrkomponentigen Bindemittels - z.B. Wasser und Zement - gleichzeitig oder zumindest zeitlich überlappend beigemischt. Dadurch entsteht das Problem, das das Aushärten des Bindemittels schon lang vorher beginnen kann, bevor das Bindemittel gut auf die Oberfläche aller zu verbindenden Körner verteilt ist, dass also das Bindemittel schon zu früh Fließfähigkeit verliert und verklumpt. Neben fallweise zusätzlich auftretenden anderen Nachteilen kommt es dadurch zu den folgenden typischen und häufigen Nachteilen:
- Das Bindemittel vermengt sich nur sehr ungleichmäßig mit der Schüttung aus geblähten Körnern, weil es schon während des Mischens partiell aushärtet und Klumpen bildet. Das Endprodukt hat zu geringe Festigkeit.
- Es muss sehr viel Bindemittel zugegeben werden um sichere Bindung möglichst aller Körner herzustellen. Durch den hohen Anteil an Bindemittel wird die Porosität des fertigen Körpers vermindert; spezifisches Gewicht, Wärmeleitfahigkeit, Anfälligkeit für Quellen und Schwinden und für das Ansammeln von Staunässe werden erhöht.
- Das Bindemittel muss mit einem suboptimalen Verhältnis der einzelnen Komponenten und/oder gemeinsam mit Verflüssigungsmitteln und/oder gemeinsam mit Mitteln für das Verzögern des Aushärtens beigegeben werden damit es sich besser mit den geblähten Körnern mischen lässt und nicht vorzeitig aushärtet. Durch die Zusatzmaterialein wird die Porosität vermindert, spezifisches Gewicht, Wärmeleitfähigkeit, Anfälligkeit für Quellen und Schwinden und für Ansaugen von Nässe werden erhöht. Die erreichbare Endfestigkeit wird vermindert. Je nach Art des Bindemittel wird es erforderlich den fertigen Körper lange auszutrocknen oder ihn lange mit Luftsauerstoff oder CO2 zu kontaktieren. Bei Hitzeeinwirkung kann es zu störenden oder gefährlichen Ausgasungen aus dem fertigen Körper kommen.
- Während des Einmischens des Bindemittels werden sich bildendende verfestigte Bereiche noch umgeformt oder gebrochen. Die gebrochenen oder umgeformten Teile haben geringere Festigkeit als unverformte Teile und sie sind mit anderen Teilen nicht oder kaum mehr verbindbar. Das Endprodukt hat zu geringe Festigkeit.

Die der Erfindung zu Grunde liegende Hauptaufgabe besteht darin, ein Verfahren für das Verbinden von geblähten Körnern Vulkanglases (beispielsweise Perlite) bereitzustellen, mit Hilfe dessen erreichbar ist, dass der dementsprechend hergestellte Körper gute Wärmeisolierfähigkeit und gute Feuerfestigkeit aufweisen kann und dennoch mechanisch sehr gut fest ist. Darüber hinaus soll das Verfahren rasch und mit gut reproduzierbarer hoher Qualität durchführbar sein.

Für das Lösen der Aufgabe wird von den bekannten Verfahren ausgegangen, bei denen Körner aus geblähtem Vulkanglas (typischerweise Perlite oder Obsidian) mit einem aushärtbaren, aus mehreren Komponenten zusammenzusetzendem Bindemittel beschichtet werden, eine Schüttung der beschichteten Körner durch Druck etwas verdichtet wird und das Bindemittel aushärten gelassen wird. Zwei Komponenten des Bindemittels sind dabei typischerweise Zement und Wasser. Beispielsweise können die Komponenten aber auch Gips und Wasser, Kalk und Wasser, flüssiger Härter und Wasserglas (Alkalisilikat in wässriger Lösung), flüssiges Harz und pulverförmiger Härter sein. Als des Weiteren mit Wasser zu kombinierende Komponentengruppe eignet sich auch gut eine Mischung aus Kalk und Gips oder aus Kalk und Zement.

Erfindungsgemäß wird vorgeschlagen, in einem ersten Schritt die zu verbindende Schüttung von Körnern von geblähtem Vulkanglas nicht mit allen Komponenten des Bindemittels zu kontaktieren, sondern nur mit einer Komponente oder Komponentengruppe, welche ohne eine weitere Komponente oder Komponentengruppe, die im ersten Arbeitsschritt nicht zugegeben wird, nicht oder nur extrem langsam aushärten kann. Bevorzugt gibt man im ersten Schritt dabei nur jene Komponente bzw. Komponentengruppe bei, welche beim optimalen Mengenverhältnis der Komponenten bzw. Komponentengruppen eine geringere Schüttmenge darstellt als die restliche Komponente bzw. Komponentengruppe.

Erst wenn die Körner gut und gleichmäßig mit der ersten Komponente bzw. Komponentengruppe kontaktiert (benetzt, beschichtet) sind, wird in die Schüttung die zweite, mengenmäßig bedeutendere Komponente bzw. Komponentengruppe des Bindemittels zugegeben und eingemischt. Das so gebildete Gemisch wird durch Druck etwas verdichtet und in Form gebracht und aushärten gelassen.

Indem die Komponenten bzw. Komponentengruppen in mindestens zwei Schritten zugegeben werden, wobei mit der im ersten Schritt zugegebenen Komponente bzw. Komponente noch kein Aushärten möglich ist bzw. eventuell nur extrem langsam möglich ist, kann mit einer sehr kleinen Menge an Bindemittel das Auslangen gefunden werden und die Mengenverhältnisse an Bindemittel können sehr optimal eingestellt werden.

Es wird nämlich damit ermöglicht, dass die erste Komponente bzw. Komponentengruppe ohne jeden Zeitdruck auf alle Körner von geblähtem Vulkanglas verteilt werden kann, da diese Komponente bzw. Komponentengruppe ohne die zweite Komponente bzw. Komponentengruppe nicht oder nur extrem langsam aushärten kann. Wenn dann die zweite, ergänzende Komponente bzw. Komponentengruppe dazu gemischt wird, so kann auch diese relativ stressfrei beigemischt werden, da an den einzelnen Körnern von geblähtem Vulkanglas jeweils nur eine sehr kleine Menge der ersten Komponente bzw. Komponentengruppe vorhanden ist und damit auch nur eine kleine Menge der zweiten Komponente bzw. Komponentengruppe an den einzelnen Körnern gemeinsam mit der ersten Komponente bzw. Komponentengruppe ein aushärtbares Bindemittel bilden kann.

Am Beispiel von Wasser und Zement (welches weiter unten noch detaillierter beschrieben wird) heißt dass, dass zuerst eine kleine Menge Wasser einer Schüttung von Körnern geblähten Vulkanglases beigegeben wird und beides so lange gemischt wird, dass das Wasser weitgehend gleichmäßig auf alle Körner verteilt ist, auf den einzelnen Körnern aber nur einen sehr dünnen Feuchtigkeitsfilm bildet. Im nächsten Arbeitsgang wird der Schüttung Zement beigemischt und zwar gleich viel wie es stöchiometrisch zur zuvor eingebrachten Wassermenge passt oder auch geringfügig mehr Zement. Das Wasser ist so gut auf die einzelnen aufgeblähten Körner verteilt, dass an den einzelnen Körnern nur eine dünne Schicht Zement haften bleibt und restlicher allenfalls jemals in der Nähe befindlicher Zement gar nicht feucht werden kann, da dafür kein Wasser bereit ist. Der noch nicht mit Wasser in Kontakt gekommene Zement wird und im Zuge des Mischvorganges so lange durch die Schüttung bewegt, bis er auf Körner trifft, an welche vorher noch kein Zement gekommen ist. An diesen Körnern bleibt er kleben und bildet mit der dort schon vorher vorhandenen wasserschicht ein aushärtbares Bindemittel.

Mit dem Begriff "mehrkomponentiges Bindemittel" ist ein Bindemittel gemeint, bei welchem durch das Zusammenmischen von mindestens zwei fließfähigen, also in flüssiger oder pulverförmiger Form vorliegenden Chemikalien, bzw. Chemikalienmischungen - des Weiteren als "Komponenten bzw. Komponentengruppen" bezeichnet -, welche für sich allein zumindest weitgehend stabil sind, ein chemischer oder physikalischer Vorgang gestartet wird, durch welchen die Mischung aller Komponenten aushärtet, sich also von einer Flüssigkeit oder einem Pulver oder einer Mischform davon zu einem monolithischen Festkörper verwandelt. Mit "Komponentengruppe" ist im diesem Sinne eine Mischung mehrerer Komponenten gemeint, welche aber noch nicht aushärtbar ist, sondern erst durch Beimischung einer weiteren Komponente bzw. Komponentengruppe aushärtbar wird.

Wie vorher schon beispielhaft erläutert kann die eine Komponente ein Zement sein und die andere Komponente Wasser.

Beispielsweise könnte die eine Komponentengruppe eine Mischung aus mehreren verschiedenen hydraulischen Bindemitteln (verschiedene Zemente, Kalk, Gips) sein und die andere Komponentengruppe Wasser und ein darin hineingemischter Farbstoff.

### Beispiel 1: Herstellen eines Körpers aus aufgeblähten Perlitekörnern unter Verwendung von Zement und Wasser als zweikomponentiges Bindemittel.

Die aufgeblähten Körner aus Perlite werden in folgenden (an sich bekannten) Arbeitsschritten gebildet:
- Nicht aufgeblähte Körner werden auf 250 bis 350 °C erhitzt (Temperaturbereich in welchem das silikatische Material noch fest ist aber schon ein Teil des eingeschlossenen Kristallwassers verdampft) und mehrere Minuten auf dieser Temperatur gehalten.
- Dann werden die Körner etwa auf Raumtemperatur abkühlen gelassen und zumindest mehrere Minuten auf dieser Temperatur belassen.
- Dann werden die Körner einem etwa 900°C heißen Schachtofen oben zugeführt und durch den Schachtofen nach unten durchfallen gelassen. Dabei werden die Körner zufolge Hitzeeinwirkung aufgebläht (silikatisches Material wird zähflüssig; verdampfendes Kristallwasser bläht die Masse auf).
- Die Temperatur im Schachtofen und dem unten daran anschließenden Teil wird so geregelt, dass die Körner nach dem ausreichenden Aufblähen innerhalb von etwa 5 Sekunden auf ein Temperaturniveau von 100 °C bis 150 °C abgekühlt werden und dann in diesem Temperaturintervall mehrere Sekunden gehalten werden. (Sind die geblähten Körner zu lange auf einem zu hohen Temperaturniveau, so wird ihre Oberfläche samtig rau und nimmt bei Kontakt mit einer Bindemittelkomponente unvorteilhaft viel von dieser Komponente an. Werden die geblähten Körner zu rasch abgekühlt, so ist ihre Oberfläche glasig glatt und es ist schwierig, ausreichend viel Bindemittelkomponente daran anzulagern um letztendlich einen festen Verbundkörper bilden zu können.)
- Danach werden die Körner auf Umgebungstemperatur auskühlen gelassen.

Die so gebildeten aufgeblähten Körner sind etwa kugelförmig und haben eine geschlossene Außenhaut. Abhängig von der Korngröße des Ausgangsmaterials und der Dauer der Temperatureinwirkungen in den beiden Heizstufen sind Schüttgewichte von etwa 50 kg/m³ bis über 400 kg/m³ einstellbar.

1 m³ Schüttgut aus gemäß obiger Schrittfolge gebildeten geblähten Perlitekörnern wird bereitgestellt. Der Durchmesser der Körner ist kleiner als 0,6 mm; das spezifische Gewicht der Schüttung beträgt 100 kg/m³.

Das Schüttgut wird mit 33 kg Wasser in einem als Horizontalmischer ausgeführten Zwangsmischer vermischt. (Feststehende Trommel oder feststehendes Rohr mit horizontal ausgerichteter Achse ausgebildet, darin sich um eine horizontale Achse angetrieben drehendes Rührwerk.) Der Mischvorgang dauert mehrere Minuten sodass sichergestellt ist, dass die relativ geringe Wassermenge gut auf alle geblähten Körner verteilt ist. Das Schüttgut ist nun gleichmäßig feucht bis nass. Das Wasser stellt die erste Komponente des zweikomponentigen Bindemittels dar.

In einem weiteren Schritt wird als zweite Komponente des zweikomponentigen Bindemittels 100 kg Zement (Portlandzement oder Sulfataluminatzemente) beigefügt, dessen spezifische Oberfläche mindestens 2500 Blaine (=cm²/g) beträgt. Als Mischer wird bevorzugt ein als Horizontalmischer ausgeführten Zwangsmischer verwendet; der Mischvorgang dauert etwa eine Minute.

Die fertige Mischung, welche nicht flüssig sondern krümelig, trockener als erdfeucht ist, wird in Gießformen, beispielsweise Plattenformen geschüttet, glatt gestrichen und durch einen Pressenstempel im Volumenverhältnis 1,05:1 bis 3:1 verdichtet. Durch die gewählte Verdichtung ist einstellbar ob der zu bildende Körper leichter und damit besser wärmeisolierfähig sein soll oder schwerer und damit höhere mechanische Festigkeit haben soll.

Nach dem Verdichten ist die Mischung sofort grünstandsfest, ist also ein monolithischer fester Körper, welcher ausgeschalt werden kann.

Nach ein paar Minuten spätestens nach einer Stunde ist der Körper ausreichend fest um transportiert oder auf Palletten geschichtet und ausgeliefert werden zu können.

Der sogenannte WZ-Faktor ("Wasser-Zement-Faktor") sagt für Zemente aus, welche Menge Wasser durch eine Menge Zement chemisch gebunden werden kann, beschreibt also das stöchiometrische Verhältnis zwischen Zement und Wasser welches durch diesen chemisch gebunden werden kann. Für Zemente beträgt der WZ-Faktor typischerweise 1:3. Wenn - wie in Beispiel 1 vorgeschlagen - gleich viel oder ganz knapp weniger Wasser verwendet wird wie es der stöchiometrisch zum Zement passenden Menge entspricht, so wird alles verwendete Wasser durch den Zement chemisch gebunden. Es wird damit maximale Härte des abgebundenen Zementes erreicht und es wird erreicht, dass nach dem Abbinden keinerlei Wasser abtrocknen muss und dass auch keinerlei Restfeuchtigkeit im fertigen Körper enthalten ist. Weiters wird damit erreicht, dass das Erhärten des Zementes maximal rasch erfolgt. An dem Körper welcher gemäß Beispiel 1 hergestellt wurde sind daher keinerlei Trocknungsarbeitsgänge (Autoklav, Heizkammer etc.) erforderlich. Da alles Wasser chemisch gebunden ist, ist der Körper nahezu schwundfrei.

In einer vorteilhaften Weiterentwicklung zu Beispiel 1 ist das Wasser, welches die erste Komponente des zweikomponentigen Bindemittels darstellt, mit einem Farbstoff gefärbt, sodass es eine Komponentengruppe darstellt. Dadurch wird beim Mischen des Wassers mit der Körnerschüttung optisch gut erkennbar, ob die Körner gleichmäßig mit Wasser benetzt sind. Der Farbstoff kann als Zusatzfunktion auch die Funktion eines Verflüssigers innehaben.

In einer weiter vorteilhaften Weiterentwicklung dazu ist der verwendete Farbstoff ein Puzzolan. Diese Stoffe sind nicht nur stark farblich (Braun- und/oder Rottöne) sondern auch eine Art Zement, welcher sehr langsam (nach etwa 21 Tagen) beginnt allenfalls vorhandenes freies Wasser chemisch zu binden. Damit ist ein zusätzlicher Schutz vor Nässe gegeben. Durch sein extrem langsames Abbinden bewirkt das Puzzolan keinerlei Probleme durch zu rasches Verfestigen während des Mischens oder des Formfüllens. Puzzolane bewirken überdies hoch hitzebeständige Bindungen und verhindern Schwindung.

In einer Weiteren-vorteilhaften Weiterentwicklung zu Beispiel 1 ist auch der Zement mit einem Farbstoff versehen, stellt also streng genommen eine Komponentengruppe dar. Indem der Zement mit einem Farbstoff versehen ist, ist auch beim zweiten Mischvorgang optisch gut erkennbar, wann ausreichend viel gemischt wurde sodass der Zement (= "zweite Komponentengruppe") gut in der Mischung verteilt ist. Auch der mit der zweiten Komponente zugegebene Farbstoff kann die Zusatzfunktion eines Verflüssigers innehaben.

In einer weiter vorteilhaften Ausführungsvariante dazu ist der dem Zement beigemischte Farbstoff ein Puzzolan. Es sind damit die gleichen Vorteile erreichbar wie zuvor anhand der Beimischung von Puzzolan zur ersten Kompenentengruppe erklärt.

Es ist durchaus möglich und sinnvoll, sowohl mit Puzzolan vermengtes Wasser also auch mit Puzzolan vermengten Zement zu verwenden wobei für Wasser und Zement unerschiedlich farbige Puzzolane verwendet werden, beispielsweise ein hellrotes Puzzolan und ein dunkelbraunes Puzzolan sodass auch damit für den zweiten Mischgang gut erkennbar ist, wann ausreichend gemischt ist.

Wenn am Beispiel 1 die Verdichtung der auszuhärtenden Mischung hoch gewählt wird, beispielsweise im Volumenverhältnis 2:1 oder 3:1, so ist der damit gebildete Körper sehr fest und mit einer Dichte im Bereich von 0,6 kg/dm³ immer noch spezifisch relativ leicht. Beispielsweise können damit Platten gebildet werden, welche - ohne Erfordernis von zusätzlichen Randschichten - als feuerfeste/feuerbeständig stabile und verzugsfreie Türblätter verwendet werden können.

Wenn die Verdichtung geringer eingestellt wird, beispielsweise 1,05:1 oder 1,1:1, so ist die Dichte des gebildeten Körpers etwa 0,23 kg/dm³. Die Wärmeisolierfähigkeit ist dann im Bereich von guten Wärmeisoliermaterialen für den Hochbau. Man kann somit durch das Verfahren gemäß Beispiel 1 sehr gute Wärmeisolierplatten für den Hochbau herstellen. Beispielsweise können damit wärmeisolierende sogenannte Putzplatten hergestellt werden. Diese können beispielsweise an die Innenseite von Mauern montiert werden und sind sofort nach der Montage bemal- oder tapezierbar. Die Platten können mit anderen Wandflächen durch Verkleben oder auch durch Schrauben oder Dübeln verbunden werden.

Dadurch, dass gemäß Beispiel 1 mit Zement bzw. Zementen und Wasser ein mehrkomponentiges Bindemittel verwendet wird, welches weder Stoff an die Umgebung abgibt, noch aus der Umgebung Stoff aufnimmt, kann der gemäß Beispiel 1 hergestellte Körper auch ohne störende Nebeneffekte durch gas- und dampfdichte Außenschalen von der Umgebungsluft abgeschlossen werden. Beispielsweise können also gut wärmeisolierende, absolut dichte und bezogen auf das Gewicht extrem biegesteife Baupaneele gebildet werden indem eine gemäß Beispiel 1 hergestellte Platte als Kern eines Sandwiches verwendet wird dessen Außenschichten durch dünne Bleche gebildet sind. Die Paneele sind darüber hinaus feuerfest, wasser- und frostsicher, nagetiersicher, sicher gegen Pilzbefall (auf Grund des extrem basischen PH-Wertes des Bindemittels) und verottungssicher.

Platten, welche mit dem Verfahren gemäß Beispiel 1 hergestellt wurden, sind auch als Kern von Möbelpaneelen verwendbar. Die Deckschichten können wie bei üblichen, aus Holzspänen bestehenden Platten, auch aus Schichtstoff (melaminharzgetränktes Dekorpapier) gebildet sein. Gegenüber Spanplatten weisen die gemäß Beispiel 1 gebildeten Platten Vorteile wie Feuchtigkeitsbeständigkeit, Unbrennbarkeit und Freiheit von jeglichen Ausdampfungen auf.

Deckschichten einer Platte, welche erfindungsgemäß verbundene Körnern aus geblähtem Vulkanglas umgeben können beispielsweise auch aus einem Flies, einem Gewebe oder aus Papier oder Kartonbestehen.

Je feiner der gemäß Beispiel 1 verwendete Zement vermalen ist, mit desto weniger Zement und damit auch mit desto weniger Wasser findet man das Auslangen und desto dünner kann die Bindemittelschicht auf der Oberfläche der zu verbinden Körner aus geblähten Vulkanglas ausgebildet sein. Für die Verbindung der aufgeblähten Körner ist nicht die Dicke der Schicht des Bindemittels auf deren Oberfläche entscheidend, sondern die Vollständigkeit der Ummantelung durch diese Schicht. Je feiner der Zement vermalen ist, desto dünner kann die Schicht sein. Gute Ergebnisse werden erzielt, wenn die spezifische Oberfläche des Zementes, 2500 Blaine beträgt. Bessere Ergebnisse werden erzielt wenn der Zement eine Feinheit von 6000 Blaine aufweist. (Je größer die spezifische Oberfläche des Zementes ist, desto feiner ist er.)

Besonders vorteilhaft ist es Sulfataluminatzement zu verwenden. Er bindet besonders rasch ab (nach wenigen Stunde, beispielsweise drei Stunden werden 80% der Endfestigkeit erreicht) und erreicht eine sehr hohe Endfestigkeit.

An Stelle von Zement als eine Komponente eines erfindungsgemäß verwendbaren Bindemittels, welches als zweite Komponente Wasser erfordert kann auch Kalk (Calciumhydroxid), Gips (Calciumsulfat) und Mischungen dieser Stoffe untereinander und/oder mit Zement verwendet werden. Allerdings verlangen Kalk und Gips auch nach dem Erreichen der Grünstandsfestigkeit wegen der erforderlichen Trocknung und Karbonatisierung auch Austausch mit der Umgebungsluft. Die aus aufgeblähten Vulkanglaskörnern und diesen Bindemitteln gebildeten Körper dürfen also nach dem Erreichen der Grünstandsfestigkeit (welche sehr schnell erreicht wird) erst nach einiger Zeit durch äußere Deckschichten von der Umgebungsluft abgeschottet werden.

Beispielsweise für die Anwendung als wärmeisolierende Fassadenplatte können erfindungsgemäß hergestellte plattenförmige Körper auch mit Glas als äußerer Deckschicht versehen sein.

Zur Herstellung eines Verbundkörpers, welcher aus einem Kern und Deckschichten besteht, wobei die Deckschichten aus Glas oder Metall bestehen und der Kern aus einem gemäß Beispiel 1 hergestellten Körper, kann als "Klebstoff" für die Verbindung des Kerns mit den Deckschichten ein Slurry aus Zement und Wasser oder ein Slurry aus Kalk (Calciumhydroxid) und Wasser verwendet werden. Dieser Slurry ätzt auf Grund seines extrem basischen pH-Werts die Deckschicht an und stellt die Verbindung zu dem ohnedies mineralischen Kern her. Die Deckschichten können auch als "verlorene" Form schon bei der Herstellung des Kerns verwendet werden.

In einer Abwandlung zu Beispiel 1 werden anstatt der in Beispiel 1 vorgeschlagenen sehr leichten Körner aus geblähtem Vulkanglas schwere Körner aus geblähtem Vulkanglas verwendet, bei denen die Schüttdichte im Bereich von 250 kg/m³ bis 350 kg/m³ liegt. Durch ihre geringere innere Porosität sind die Körner mechanisch deutlich fester, Bevorzugt bestehen die Körner dabei aus Obsidian. (Obsidian ist chemisch weitgehend gleich wie Perlite, ist kostengünstiger erhältlich lässt sich aber nicht so weit aufblähen wie Perlite.) Mit den im Übrigen gleichen Arbeitsschritten wie in Beispiels 1 aufgelistet, lassen sich damit Ziegel herstellen.

Diese Ziegel sind gegenüber Ziegeln aus gebranntem Ton bei gleicher oder besserer mechanischer Belastbarkeit deutlich besser wärmeisolierend. Anstatt Zement als eine Komponente des Bindemittels ist für diese Anwendung durchaus auch Kalk (Calciumhydroxid) verwendbar.

Bei ideal stöchiometrischem Verhältnis zwischen Zement und Wasser ist die Zeit zwischen dem Beginn des Beimischens von Zement zu den befeuchteten geblähten Körnern bis zur Grünstandsfestigkeit etwa eine Minute. Man kann also sehr rasch produzieren. Wenn aus produktionstechnischen Gründen - etwa zur Herstellung komplizierter geformter Körper - diese Zeit länger sein soll, so kann man dem Wasser auch einen Abbindeverzögerer, beispielsweise Weinsäure zusetzen.

Im Fall dass ein Verbundkörper aus einem erfindungsgemäß hergestellten Kern und gas- und flüssigkeitsdichten, den Kern allseits umschließenden Deckschichten gebildet wird, wobei als zweikomponentiges Bindemittel Zement und Wasser verwendet wird, kann aus dem Körper, welcher den Kern bildet auch vorhandene Luft abgesaugt werden und nach Verschließen der Absaugöffnung durch die Deckschicht der im Kern vorhandene Unterdruck dauerhaft aufrecht erhalten werden. Der Unterdruck ist dauerhaft aufrecht erhaltbar, weil die Komponenten des Kerns weder irgendetwas ausdampfen noch - wie Kalk zur Karbonatisierung - Kontakt mit der Umgebungsluft brauchen. Es lassen sich damit besonders gut wärmeisolierende Verbundplatten bilden. Als Deckschichten kommen vor allem Metall, Glas und diffusionsdichte Kunststoffe in Betracht. Im Fall, dass Deckschichten als verlorene Schalung schon für die Formgebung des Kernes verwendet werden, kann der Pressdruck für das Verdichten des Kerns aufgebracht werden, indem bei am Kern anliegenden Deckschichten Luft aus dem Volumen des Kerns abgesaugt wird, sodass die Deckschichten durch die Druckdifferenz zwischen Luftdruck im Kern und umgebendem Luftdruck an den Kern gedrückt werden. Verbundkörper, welche einen Kern aus erfingdungsgemäß miteinander verbunden aufgeblähten Vulkanglaskörnern und Deckschichten aufweisen, sind nicht nur als Bau- und Möbelplatten anwendbar sondern auch an Fahrzeugen, insbesondere als flächige Bauteile von Personenwagen, Lastkraftwagen, Eisenbahnwaggons und Schiffskörpern.

Auch Rahmenteile von Fenstern und Türen sowie die feststehenden Zargen dafür können vorteilhafterweise als Verbundkörper aus einem Kern von erfindungsgemäß miteinander verbundenen geblähten Vulkanglaskörnern und einer allseits dichten Außenschicht gebildet sein.

In einer Verfahrensvariante für die Herstellung von Verbundkörpern aus einem Kern von erfindungsgemäß miteinander verbundenen geblähten Vulkanglaskörnern und einer allseits dichten Außenschicht, wobei im Kern ein Unterdruck herrscht, wird das aus Bindemittel und geblähten Körnern bestehende Kernmaterial gepresst und in gepresstem Zustand aushärten gelassen und erst nach dem Aushärten wird durch eine temporäre Öffnung in der den Kern umfassenden, aus einem dichten Material bestehenden Umhüllung des Kerns Luft abgesaugt, sodass die Umhüllung durch den äußeren Luftdruck an den Kern angedrückt wird. Vorteilhaft ist dabei, dass der Pressdruck, welcher beim Aushärten an das Kernmaterial aufgebracht wurde größer ist als der Druck der später zufolge des Druckunterschiedes zwischen äußerem Luftdruck und Luftdruck im Kern auf den Kern von außen wirkt. Indem schon vorher der Pressdruck so groß gewählt wurde, wird sichergestellt, dass die als zweites auftretende Druckkraft das Kernmaterial nicht mehr verformen kann.

In einer besonders vorteilhaften Ausführungsvariante eines Verbundkörpers aus einem Kern von erfindungsgemäß miteinander verbundenen geblähten Vulkanglaskörnern und einer allseits dichten Außenschicht ist das Bindemittels zwischen den Vulkanglaskörnern Wasserglas und Härter und die Außenschicht ist ein Blech. Man erreicht damit die Vorteile rasche Herstellbarkeit und gute Feuerfestigkeit/Feuerbeständigkeit. Ausgehärtetes Wasserglas kann im Allgemeinen durch intensiven Kontakt mit Wasser geschädigt werden. Diesbezüglich besteht bei dem beschriebenen Verbundkörper keinerlei Gefahr, da der Kern des Verbundkörpers und damit das Wasserglas-Bindemittel von der Umgebung dicht abgeschottet ist.

Zusätzlich zu den schon besprochenen erfindungsgemäß verwendbaren zweikomponentigen Bindemitteln seien als weitere erfindungsgemäß verwendbare zweikomponentige Bindemittel kurz erwähnt:

### Kunstharze und Härter:

Typischerweise wird erst der zumeist pulverförmig Härter (typischerweise mehrfache Amine wie 1,3-Diaminobenzol, und aliphatische Amine, wie Diethylentriamin) mit der Schüttung aus aufgeblähten Vulkanglaskörnern gut gemischt bevor das flüssige Kunstharz, typischerweise Epoxidharz, beigemischt wird.

### Wasserglas und Härter:

"Wasserglas" im Sinne dieser Beschreibung sind amorphe Natrium- und Kaliumsilicate sowie ihre wässrigen Lösungen. In der fachwelt ist eine Vielzahl von Wasserglaszusammensetzungen und Härzern bekannt. Aus der Menge von den tausenden von möglichen diesbezüglichen Rezepturen sei hier nur ein einziges Beispiel genannt: 1 m³ Schüttgut aus geblähten Perlitekörnern wie in Beispiel 1 wird erst mit 6 kg flüssigem Härter für Wasserglas gut vermischt. Der Härter besteht aus 90% Wasser, 6 % Natriumhydrogencarbonat (Speisesoda) und 4% Glyoxal (= Ethandial). Erst nachdem Härter und Körner "vollständig" vermischt sind, also die Körner gleichmäßig mit Härter benetzt sind, werden 60 kg flüssiges Wasserglas beigemischt. Das flüssige Wasserglas besteht aus 42% SiO₂, 12% Na₂O und 46% Wasser. Nach der Zugabe des Wasserglases wird sehr kurze Zeit, beispielsweise eine Minute, kräftig gemischt, dann wird das Gemisch in eine Form geschüttet, glatt gestrichen und verdichtet (wie in Beispiel 1). Der so gebildete Körper ist nach wenigen Minuten so fest, dass er weiterverarbeitet werden kann.

Es sei klargestellt, dass neben den beiden Komponenten bzw. Komponentengruppen eines erfindungsgemäß in zwei zeitlich nicht überlappenden Mischvorgängen beigemischten Bindemittels auch weitere Stoffe in einem oder mehreren weiteren Mischvorgängen der Schüttung von Körnern aus geblähtem Vulkanglas dem Granulat bleigemischt werden können. Beispielsweise kann nach dem Beimischen der ersten Bindemittelkomponente ein Farbstoff und ein Abbindeverzögerer beigemischt werden bevor die zweite Bindemittelkomponente beigemischt wird. Das kann dann sehr sinnvoll sein, wenn ein Bindemittel ohne Verzögerer zu rasch aushärten würde.

Zu ergänzen ist noch, dass die Schüttung aus Bindemittel und Körnern aus geblähtem Vulkanglas nicht zwangsweise durch Druck in ihrem Volumen verringert werden muss um eine feste Bindung zwischen Körnern und Bindemittel und eine genau Anpassung an eine Form zu erreichen. In Fällen bei denen Bindemittel verwendet werden, welche beim Aushärten aufquellen, kann es auch ausreichen, die Volumenvergrößerung der Schüttung zu begrenzen. Beispielsweise kann man dann einen Formhohlraum nur zu 90% füllen und das Aufquellen der Schüttung durch das Schließen des Formhohlraums begrenzen, sodass die die Schüttung nur um weitere 10% des Volumens des Formhohlraumes aufquellen kann. Der notwendige Druck für das exakte Füllen des Formhohlraums wird dabei durch das Quellen des Bindemittels selbst verursacht.

## Patentansprüche

1. Verfahren für das Verbinden von Körnern aus geblähtem Vulkanglas unter Anwondung eines Bindemittels, welches aus mehreren flüssigen oder pulverförmigen Komponenten bzw. Komponentengruppen zusammenzumischen ist und nach dem Zusammenmischen der Komponenten bzw. Komponentengruppen aushärtbar ist, wobei Körner aus geblähtem Vulkanglas mit dem Bindemittels vermischt werden, das Mischgut in einer Form durch Druck verdichtet wird und das im Mischgut enthaltene Bindemittel aushärten gelassen wird,
**dadurch gekennzeichnet, dass**
der Mischvorgang in zwei Gängen erfolgt, wobei im ersten Mischgang die zu verbindende Schüttung von Körnern von geblähtem Vulkanglas nur mit einem solchen Teil der Komponenten bzw. Komponentengruppen des mehrkomponentigen Bindemittels, welcher für sich allein nicht aushärtbar ist, vollständig vermischt wird, und wobei in einem oder mehreren späteren Mischgängen der Rest des Bindemittels zugegeben und eingemischt wird.

2. Verfahren nach Anspruch 1, **dadurch gekennzeichnet, dass** im ersten Mischgang eine Komponente bzw. Komponentengruppe eingemischt wird, welche beim optimalen Mengenverhältnis aller Bindemittelkomponenten zueinander ein geringeres Schüttvolumen innehat als die später beigemischten Komponenten bzw. Komponentengruppen.

3. Verfahren nach Anspruch 1 oder 2, **dadurch gekennzeichnet, dass** im ersten Mischgang als erste Komponente des zweikomponentigen Bindemittels Wasser eingemischt wird.

4. Verfahren nach Anspruch 3, **dadurch gekennzeichnet, dass** im zweiten Mischgang als zweite zugefügte Komponente eines zweikomponentigen Bindemittels Zement eingemischt wird.

5. Verfahren nach Anspruch 3, **dadurch gekennzeichnet, dass** im zweiten Mischgang als zweite zugefügte Komponente des zweikomponentigen Bindemittels Calciumhyroxid eingemischt wird.

6. Verfahren nach Anspruch 3, **dadurch gekennzeichnet, dass** im zweiten Mischgang als zweite zugefügte Komponente des zweikomponentigen Bindemittels eine Mischung aus Zement und/oder Calciumhydroxid und/oder Calciumsulfat eingemischt wird.

7. Verfahren nach einem der Ansprüche 3 bis 6, **dadurch gekennzeichnet, dass** im ersten Mischgang maximal jene Wassermenge beigemischt wird, welche stöchiometrisch zur Menge der im zweiten Mischgang beigemischten Komponente passt.

8. Verfahren, nach Anspruch 1 oder 2, **dadurch gekennzeichnet, dass** im ersten Mischgang ein Härter für flüssiges Kunstharz eingemischt wird und im zweiten Mischgang flüssiges Kunstharz.

9. Verfahren nach Anspruch 1 oder 2, **dadurch gekennzeichnet, dass** im ersten Mischgang ein Härter für flüssiges Wasserglas eingemischt wird und im zweiten Mischgang flüssiges Wasserglas.

10. Verfahren nach einem der Ansprüche 1 bis 9, **dadurch gekennzeichnet, dass** der in einem Mischgang eingemischte Komponente bzw. Komponentengruppe vor dem Mischgang ein Farbstoff beigefügt wird.

11. Verfahren nach Anspruch 10, **dadurch gekennzeichnet, dass** der Farbstoff ein Puzzolan enthält.

12. Verfahren nach Anspruch 10 oder 11, **dadurch gekennzeichnet, dass** den in unterschiedlichen Mischgängen eingemischten Komponenten bzw. Komponentengruppen vor den Mischgängen zueinander unterschiedliche Farbstoffe zugemischt werden.

13. Verfahren nach Anspruch 4, **dadurch gekennzeichnet, dass** der durch die Verbindung der Körner gebildete Körper mit einer oder mehreren Deckschichten verbunden wird.

14. Verfahren nach Anspruch 13, **dadurch gekennzeichnet, dass** als Bindemittel zwischen dem Körper und den Deckschichten ein Slurry aus Wasser und Zement verwendet wird.

15. Verfahren nach Anspruch 13 oder 14, **dadurch gekennzeichnet, dass** nach dem letzten Mischgang vorliegende Mischgut durch eine luftdichte Deckschicht umhüllt wird und aus dem Inneren der Umhüllung Luft abgesaugt wird.
